# EUROPEAN PATENT APPLICATION

(11) **EP 1 990 756 A2**
(43) Date of publication of application: **12.11.2008**
(21) Application number: 08251476.1
(22) Date of filing: 21.04.2008
(51) Int. Cl.: G06K 7/00

(54) **Connector device**

(30) Priority: 09.05.2007 DE 202007006626 U
(71) Applicant: Hamburg Industries Co., Ltd., Taipei Hsien (TW)
(72) Inventor: Huang, Ya-Li, Shen Keng Hsiang Taipei Hsien (TW)
(74) Representative: Gee, Steven William

(57) **Abstract**

A connector device in which a chip card can be plugged into, and which possesses heat dissipating function is provided. The connector device includes an insulator body, several terminals positioned on the insulator body and each terminal includes a contacting portion, a cover body covered on the insulator body, enclosing the terminals and having at least one heat dissipating window positioned above the contacting portion; and a heat conduction plate mounted on the cover body and being concaved toward each heat dissipating window to form at least one guiding groove.

## Description

### BACKGROUND OF THE INVENTION

### 1. Field of the Invention

The present invention relates to a connector device, and especially to a connector device in which a chip card can be plugged in, and has heat dissipating capability.

### 2. The Prior Arts

With the advancement of electronic technologies, conventional methods for business transactions or data transmission in our daily lives are being more and more developed around electronic technologies, such as the credit card for money transactions, the cash card or electronic purse card, used for paying transportation fares, the IC card for parking fees, the health card having individual health information or personal identification function being stored, the access card, and various kinds of smart card such as for the set-top box for digital television, which have all dramatically-changed the conventional habits for carrying cash, personal identifications, and keys, or for watching TV. Nowadays, a person can use a chip card to replace the aforementioned conventional habits by directly swiping a chip card instead. Thus, not only much hassle is avoided, but the action to swipe the chip card is accomplished easily and quickly.

The characteristic of the above chip card is that the chip card includes input/output interface, and memory, and some even have a microprocessor in them. Thus the chip cards have data access control, storage, or even processing functions. The method for data access of these chip cards can be of contacting or non-contacting. For the non-contacting method of reading the chip card, one only requires to bring the chip card near to a reader for completing data transmission process. But for the contacting method for data transmission, the chip card is required to be plugged in or put into a connector device of a card reader device which is electrically connected, thus accomplishing electrical conduction and data transmission. Because the space where the chip card is plugged in or put into is of a confined space, if the number of insertions or readings of the card is too excessive or the duration for reading or inputting the card after it being inserted is too long, the terminal portion being electrically- reach relatively high temperature, especially for the connector of the set-top box for digital TV, on which the chip card is being read continuously when watching TV; therefore, the amount of heat produced from the chip card is quite astounding. Because a preferable heat dissipating structure or device is not disposed on the conventional connector device, the heat buildup from the card because of long usage duration or frequent usage will damage the electronic parts on the reader device with the connector device or damage the chip card being used. As a result, the reader device is prone to suffer from crashes easily or that the chip card functionality would be failed, or at the same time the lifespan of the reader device or the chip card would become shortened.

### SUMMARY OF THE INVENTION

To improve upon the disadvantage of having inadequate heat-dissipation ability of the conventional connector, thereby avoiding the reading device of which the connector is disposed on to suffer from crashes or the functionality failures of the chip card, and at the same time, the lifespan of the reader device and the chip card are increased. The present invention provides a connector device having superior heat dissipation function. The heat conduction plate in the present invention can remove the heat buildup in the region surround the connector terminals via conduction or convection produced by the chip card, so that the temperature of the connector can be controlled, and thus the disadvantage of the reduced lifespan of the electronic devices is eliminated.

To achieve above objective, a connector device provided in the present invention includes an insulator body, a plurality of terminals mounted on the insulator body and each having a contacting portion, respectively, a cover body covered on the insulator body, and the cover body is enclosing the terminals and is formed with a heat dissipating window, which is positioned above the contacting portion, and a heat conduction plate mounted on the cover body and has formed at least one guiding groove concaved toward each heat dissipating window. Furthermore, the material of the heat conduction plate can be aluminum or copper, but it is not limited by to these two kinds of metal, and any other materials having high coefficient of thermal conductivity can be used. Many raised fins can be made to protrude and extend out from the surface of the heat conduction plate, but is not limited to only this structure. In addition, a plurality of guiding grooves can be made, and each guiding groove can be positioned in parallel or corresponding to the contacting portion.

By means of the heat conduction plate, the heat produced by the contacting portion, due to of electrical conductance, can be transferred to the surface of the connector device across the heat conduction plate or is be transferred by convection when the chip card is plugged into a connector device. Therefore, the temperature of the chip card and the connector device can be dropped, and the disadvantage of shortened lifespan of reader device or chip card because of the produced high temperature of conventional connector device can be avoided.

According to the detailed description of the embodiments above, it is hope to describe the characteristic and spirit of describe the invention more clearly, and not use embodiments to take the present invention into the restriction. On the contrary, the purpose is to hope it can cover various changes and the arrangements that have the equality in the scope of the present invention which is intended to be defined by the appended claims.

### BRIEF DESCRIPTION OF THE DRAWINGS

The present invention will be apparent to those skilled in the art by reading the following detailed description of a plurality of embodiments thereof, with reference to the attached drawings, in which:

FIG. 1 is an exploded perspective view of an embodiment of the present invention;

FIG 2 is an assembly view of the embodiment of the present invention;

FIG. 3 is a side view of the embodiment of the present invention;

FIG 4 is a schematic view showing a heat conduction plate of a second embodiment of the present invention; and

FIG 5 is a schematic view showing another heat conduction plate of a third embodiment of the present invention.

### DETAILED DESCRIPTION OF THE PREFERRED EMBODIMENT

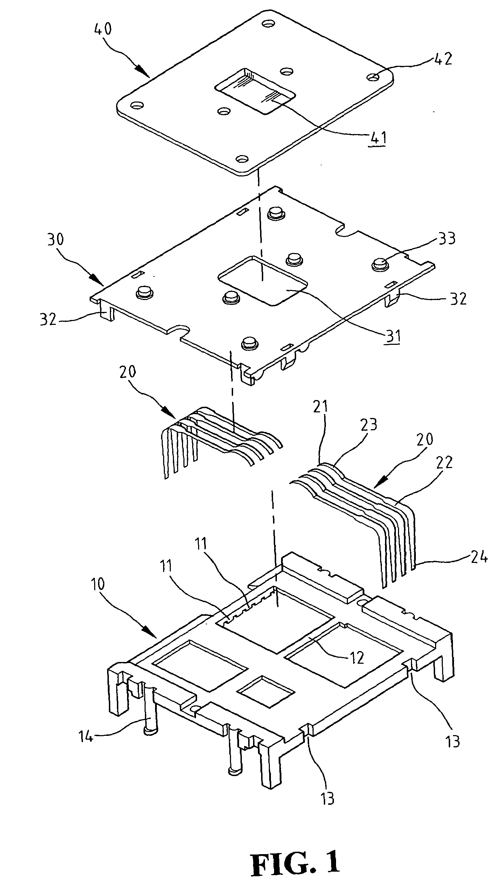

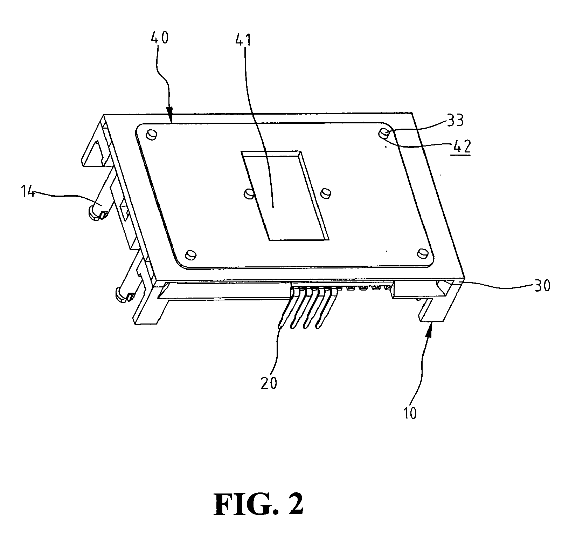

Referring to FIGS. 1 and 2, an exploded perspective view and an assembled view of an embodiment of the present invention are shown, respectively. A connector device in the present invention includes an insulator body 10, a plurality of terminals 20, a cover body 30, and a heat conduction plate 40. The terminals 20 are mounted between the insulator body 10 and the cover body 30 on which the heat conduction plate 40 is positioned. In the present invention, by making use of the heat conduction plate 40 to radiate heat, the heat in the connector device can be conducted outside.

With reference to FIG 1, the lower surface of the insulator body 10, made of insulated material, is formed with a plurality of terminal-receiving sections 11 in parallel, in which the terminals 20 can be accomodated for insertion. On the insulator body 10, there is an abutting section 12, in which the terminals 20 can be abutted against. Furthermore, the insulator body 10 is formed with a plurality of engagement slots 13, which are corresponded to the engagement hooks 32. On the lower surface of the insulator body 10, there are a plurality of setting posts 14 for positioning and securing the reader device.

The terminals 20, which are electrically connected to a chip card and a reader device, includes an abutting end 21, a securing portion 22, a contacting portion 23, and a coupling end 24. The terminals 20 are abutted against the abutting section 12 on the insulator body 10 by means of the abutting end 21. And the terminals 20 are positioned and fixed in between the terminal-receiving sections 11 by means of the securing portion 22. The coupling end 24 is coupled to other boards disposed on the reader device to form electrical connection. The contacting portion 23, having the shape of a raised arc, is electrically coupled with a chip card for carrying the data to be transmitted. When a chip card is not plugged into the connector device, the contacting portion 23 can form contact with the guiding groove 41 on the heat conduction plate 40. When a chip card is plugged into the connector device, it is pushed and pressed due to the resiliency of the contacting portion 23 so that the other face of the chip card is contacted firmly to the guiding groove 41. So, the improved heat-dissipation effect of the heat conduction plate 40 is achieved.

The cover body 30, covered on the insulator body 10, can enclose the terminals 20. The cover body 30 has a heat dissipating window 31 whose size and shape are not limited. It should be positioned above the contacting portion 23 of the terminals 20 so that heat can be emitted out when the chip card is plugged in, and the data are being transmitted. In order to discharge heat, natural heat convection can be used when hot air rises. Furthermore, radiation heat or the heat conduction method of the heat conduction plate 40 can be used to dissipate the heat. A plurality of mating plugs 33 raised from and positioned on the surface of the cover body 30 are connected to the heat conduction plate 40 and a plurality of engagement hooks 32 are formed on the lower section at the edge of the cover body 30 to make the cover body 30 to be covered and fixed in the engagement slots 13 of the insulator body 10.

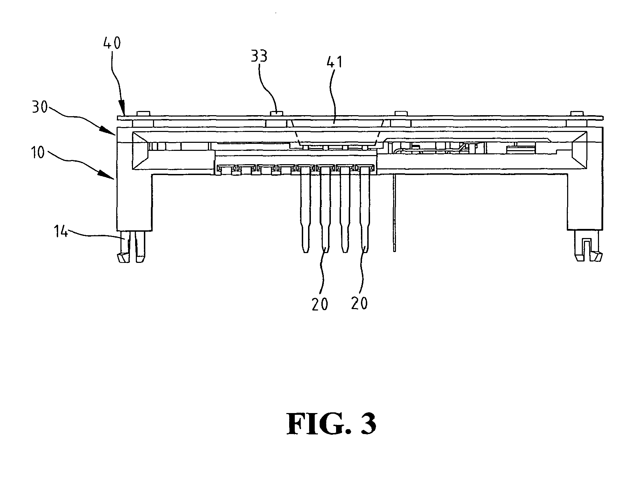

The heat-conducing fin 40 positioned above the cover body 30, is engaged and mated on the mating plugs 33 of the cover body 30 by means of a plurality of mating holes 42 on the heat conduction plate 40. Because of the locations of the mating plugs 33, a gap can be formed between the heat conduction plate 40 and the cover body 30 as the convection space of the hot air for the heat in the heat conduction plate 40, so that the heat produced by the heat conduction plate 40 can be emitted by means of convection for improving upon the efficiency of thermal emission. The heat conduction plate 40 can be made of aluminum, copper, or any other material having high coefficient of thermal conduction for conducting the heat. To emit heat buildup effectively for the chip card produced by the contacting portion 23 of the terminals 20 engaged by the chip card, in the position corresponding to the heat dissipating window 31 on the heat conduction plate 40, a concave portion of a certain depth is formed towards the heat dissipating window 31 to form a guiding groove 41, which can properly firmly contact the chip card in the cover body 30. Apart from the above convection or radiation method for emitting heat, the heat produced by the chip card can be dissipated by conduction method, and to be conducted to the heat conduction plate 40 by means of the guiding groove 41. Furthermore, the guiding groove 41 can emit all the heat out (in FIG. 3). In addition, for further improving upon the heat dissipating efficiency, a plurality of raised fins can be formed on the surface of the heat conduction plate (not shown in Figure) to increase the heat dissipating surface. But this structure is not a limiting one.

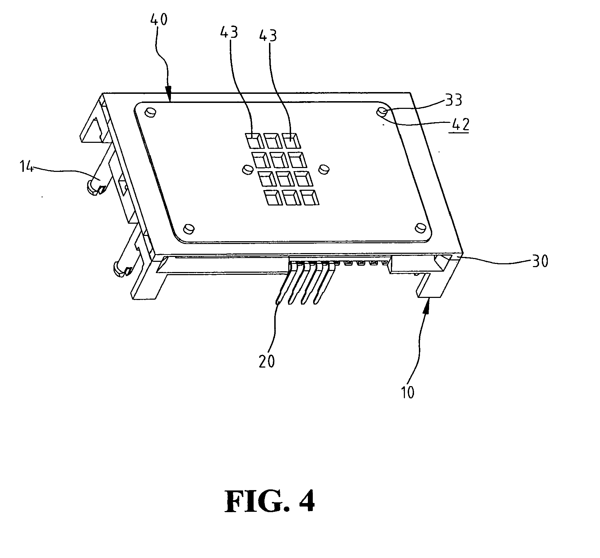

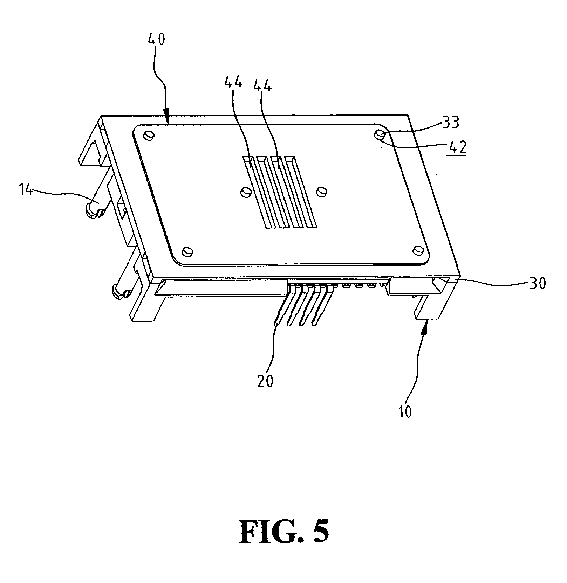

The structure of the guiding groove 41 can be shown in FIG. 4, notwithstanding for FIG. 1. In FIG 4, a plurality of small guiding grooves 43 are formed. By means of increasing the surface area of the groove wall of the small guiding grooves 43, heat dissipating efficiency is improved. The small guiding grooves 43 can be positioned based on design considerations of the connector device or to be corresponding to the position of the contacting portion 23. Furthermore, another structure of the guiding groove can be shown in FIG. 5. In FIG. 5, the guiding grooves 44 are spaced and parallel to each other, given the same reason for increasing the surface area of the groove wall of the grooves, and thus the heat dissipating efficiency is improved.

## Claims

1. A connector device, comprising:
an insulator body;
a plurality of terminals mounted on the insulator body, and each having a contacting portion;
a cover body, covered on the insulator body, enclosed the terminals, and comprising at least one heat dissipating window, wherein positioned above the contacting portion; and
a heat conduction plate, coupled and disposed above the cover body, and being concaved towards each heat dissipating window to form at least one guiding groove.

2. The connector device as claimed in Claim 1, wherein the contacting portion is contacted with the guiding groove on the heat conduction plate.

3. The connector device as claimed in Claim 1, wherein a plurality of raised fins are formed and protruding on the surface of the heat conduction plate.

4. The connector device as claimed in Claim 1, wherein a plurality of mating plugs are formed on the surface of the cover body, and a plurality of mating holes corresponding to the mating plugs are formed on the heat conduction plate.

5. The connector device as claimed in Claim 1, wherein there is a gap between the heat conduction plate and the cover body due to the support by the mating plugs.

6. The connector device as claimed in Claim 1, wherein the guiding grooves are in the form of a plurality of small guiding grooves.

7. The connector device as claimed in Claim 1, wherein each small guiding grooves is positioned corresponding to each contacting portion.

8. The connector device as claimed in Claim 1, wherein the guiding grooves are spaced and arranged in parallel.
